# NEUE EUROPÄISCHE PATENTSCHRIFT

(11) **EP 1 567 684 B2**
(45) Veröffentlichungstag und Bekanntmachung des Hinweises auf die Entscheidung über den Einspruch: **14.10.2009**
(45) Hinweis auf die Patenterteilung: 31.05.2006
(21) Anmeldenummer: 03811759.4
(22) Anmeldetag: 17.11.2003
(51) Int. Cl.: C22B 43/00, B01D 3/00

(54) **VERFAHREN ZUR ENTFERNUNG VON QUECKSILBER AUS MIT QUECKSILBER VERUNREINIGTEN LÖSUNGEN**
METHOD FOR ELIMINATING MERCURY FROM SOLUTIONS CONTAMINATED BY THE SAME
PROCEDE POUR ELIMINER DU MERCURE DANS DES SOLUTIONS CONTAMINEES AU MERCURE

(30) Priorität: 26.11.2002 DE 10255239
(43) Veröffentlichungstag der Anmeldung: 31.08.2005
(73) Patentinhaber: BASF SE, 67056 Ludwigshafen (DE)
(72) Erfinder: GUTH, Josef, 67251 Freinsheim (DE); FRIEDRICH, Holger, 67240 Bobenheim-Roxheim (DE); BENDER, Hans-Jürgen, 67251 Freinsheim (DE); SCHLÄFER, Dieter, 67071 Ludwigshafen (DE)
(86) Internationale Anmeldenummer: PCT/EP2003/012818
(87) Internationale Veröffentlichungsnummer: WO 2004/048625

(56) Entgegenhaltungen:
- DE-A- 19 704 889
- DE-A1- 19 704 889
- DE-C- 404 928
- GB-A- 465 757
- GB-A- 1 530 489
- JP-A- 03 028 295
- JP-A- 11- 181 477
- BARTHOLOMÉ/BIEKERT: 'Ullmanns Encyklopädie der technischen Chemie, Band 2,', 1972, VERLAG CHEMIE, WEINHEIM/BERGSTR., ISBN 3-527-20000-2 Artikel ' Verfahrenstechnik I, Grundoperation S. 502ff'
- KLAUS SATTLER: 'Thermische Trennverfahren, S.121 ff.', 1980, VCH VERLAGSGESELLSCHAFT MBH,, WEINHEIM, ISBN 3-527-26727-1 Artikel 'Grundlagen Auslegung,Apparate'

## Beschreibung

Die vorliegende Erfindung betrifft ein Verfahren zur Entfernung von Quecksilber aus Flüssigkeiten. Insbesondere betrifft die Erfindung ein Verfahren zur Entfernung von Quecksilber aus Lösungen, speziell ein Verfahren zur Entfernung von Quecksilber aus den bei der Zersetzung von Alkaliamalgam durch Wasser oder Alkohole entstehenden Lösungen, vor allem wässriger Alkalihydroxidlösung oder alkoholischer Alkalialkoholatlösung.

Bei einigen chemischen Verfahren fallen Quecksilber enthaltende Flüssigkeiten an. Quecksilber ist aufgrund seiner Toxizität meistens eine unerwünschte Verunreinigung und muss deshalb üblicherweise entfernt werden. Beispielsweise wird bei der Chloralkalielektrolyse nach dem A-malgamverfahren Chlor und ein Alkaliamalgam erzeugt. Dieses Alkaliamalgam wird zur Gewinnung der wichtigen und in großen Mengen hergestellten Produkte Alkalihydroxid oder Alkalialkoholat unter Zugabe von Wasser oder Alkohol zersetzt, wobei das Quecksilber wieder freigesetzt und in die Elektrolyse zurückgeführt wird. Die bei der Amalgamzersetzung erzeugte wässrige Lösung von Alkalihydroxid (üblicherweise als "Alkalilauge" bezeichnet, speziell bezeichnet "Natronlauge" eine wässrige Natriumhydroxidlösung und "Kalilauge" eine wässrige Kaliumhydroxidlösung) oder alkoholische Lösung von Alkalialkoholat enthält jedoch stets in geringen Mengen Quecksilber, typischerweise in einem Bereich von 10 bis 50 ppm ("parts per million", also Milligramm pro Kilogramm. Im Rahmen dieser Erfindung geben die Angaben ppm oder ppb, "parts per billion", also Mikrogramm pro Kilogramm stets Massenverhältnisse wieder). Dieser Quecksilbergehalt kann unter Umständen auch Werte oberhalb von 100 ppm erreichen. Diese Quecksilbermenge ist für die meisten Anwendungen von Alkalihydroxiden oder Alkalialkoholaten nicht tolerabel und muss durch ein Verfahren zur Quecksilberentfernung ("Entquickung") erniedrigt werden. Angestrebt werden dabei Werte von höchstens wenigen ppb, idealerweise höchstens 3 ppb, der Quecksilbergehalt ist also um einen Faktor von etwa 10⁴ zu erniedrigen.

Das Quecksilber liegt üblicherweise mindestens zum Teil in Form von Quecksilbermetall vor, das meist in Form feinster Tröpfchen in der Flüssigkeit dispergiert oder - unterhalb der Löslichkeitsgrenze - gelöst ist.

Es sind bereits verschiedene Verfahren zur Entfernung von Quecksilber aus Produktströmen bekannt, auch im Zusammenhang mit der Alkaliamalgamspaltung.

EP 761 830 A2 offenbart ein sehr einfaches, rein mechanisches Verfahren, bei dem feinverteiltes Quecksilber in Flüssigkeiten durch Koaleszenz in Form leicht abtrennbarer größerer Quecksilbertropfen gesammelt wird. Mit diesem Verfahren ist eine Quecksilber-Abreicherung um einen Faktor von mindestens 10 möglich, jedoch nicht bis in den unteren ppb-Bereich.

Oft wird zur Quecksilberentfernung die Bildung von festen Amalgamen genutzt. Die hierfür am besten geeigneten Metalle sind die der 11. Gruppe des Periodensystems der Elemente, die meist in Form einer Absorptionsmasse, bei der das Metall auf einem Träger verteilt ist, eingesetzt werden. So offenbart DE 21 02 039 ein Verfahren zur Entfernung von Quecksilber aus Gasen wie dem bei der Herstellung von Alkalihydroxid durch Spaltung von Alkaliamalgam mit Wasser entstehenden Wasserstoff, bei dem die mit Quecksilber verunreinigten Gase mit Kupfer auf einem porösen Aluminiumoxidträger in Kontakt gebracht und so von Quecksilber befreit werden. US 4,230,486 offenbart ein Verfahren zur Entfernung von Quecksilber aus Flüssigkeiten durch Überleiten über ein metallisches Silber auf einem porösen Träger enthaltendes Absorptionsmittel. DE 42 21 207 A1 lehrt ein Verfahren zur Entfernung von Quecksilber aus Flüssigkeiten wie Alkalilaugen oder Alkalialkoholatlösungen durch Überleiten über mit Silber beschichtete Fasern. DE 42 21 205 A1 und DE 42 21 206 offenbaren Verfahren zur Aufarbeitung solcher Fasern nach ihrem bestimmungsgemäßen Einsatz. DE 41 16 890 offenbart eine Reihe von Absorptionsmitteln zur Quecksilberentfernung, die bestimmte Metalle, insbesondere Cu, Ag, Fe, Bi, aber auch Au, Sn, Zn und Pd sowie Gemische der genannten Metalle, in metallischer oder oxidischer Form oder als Sulfid auf einem Trägermaterial enthalten. Diese Verfahren ermöglichen zwar eine Abreicherung von Quecksilber bis in den Bereich weniger ppb, die verwendeten Absorptionsmassen sind jedoch meist nur sehr schwierig regenerierbar, ihre Absorptionskapazität ist rasch erschöpft und durch notwendigen beträchtlichen Gehalt an Edelmetallen sind sie vergleichsweise teuer.

Aus DE 26 43 478 ist die Verwendung von Aktivkohle mit einer spezifischen Oberfläche von mindestens 250 m²/g zur Entfernung von Quecksilber aus Flüssigkeiten durch Adsorption bekannt. Der Einsatz von Aktivkohle-Anschwemmfiltern zur Quecksilberentfernung aus Natronlauge, Kalilauge oder Alkoholatlösungen ist technisch üblich, wie von Isfort, Chemie Anlagen und Verfahren ("CAV"), Sept. 1972, Seiten 65-69 beschrieben. Auch die vergleichsweise einfache Aktivkohlebehandlung führt jedoch nicht in allen Fällen zu zufrieden stellenden Ergebnissen. Insbesondere muss zur Erreichung der erwünschten niedrigen Quecksilberwerte ein sehr feinkörniges Pulver einer hochoberflächigen Aktivkohle verwendet werden. Vor allem bei der Filtration von Alkoholatlösungen, in denen sich (im Gegensatz zu wässrigen Laugen) durch Nebenreaktionen mit dem Alkohol oder Spaltung des Alkoholats sehr feinteilige Schlämme bilden, setzen sich die Aktivkohlefilter durch Ablagerungen dieser Schlämme sehr schnell zu, so dass nur eine unbefriedigende Standzeit der Filter erreicht wird, was die Aktivkohlebehandlung wirtschaftlich unbefriedigend macht. DE 197 04 889 offenbart als Abhilfe ein dreistufiges Verfahren zur Entquickung von Alkalialkoholatlösungen, bei dem in einer ersten Stufe die Lösung durch inertes Fasermaterial geleitet wird, um so die feinteiligen Schlämme abzutrennen und als Nebeneffekt den Quecksilbergehalt um einen Faktor von etwa 10 zu senken. Die Lösung wird in einer zweiten Stufe durch einen üblichen Aktivkohlefilter mit einer hochoberflächigen und feinteiligen Aktivkohle filtriert, was den Quecksilbergehalt wiederum um einen Faktor von etwa 10 absenkt. In einer dritten Stufe wird eine destillative Aufkonzentration des Alkoholats durchgeführt, also durch Abdampfen des Alkohols die Lösung eingeengt und so die gewünschte Alkoholatkonzentration eingestellt, indem die Alkoholatlösung in einer Destillationsblase vorgelegt und über eine Füllkörperkolonne Alkohol abdestilliert wird. Dabei sinkt die Quecksilberkonzentration nochmals um einen Faktor von etwa 10. Insgesamt werden mit dem beschriebenen Verfahren Quecksilbergehalte von 28 bis 50 ppb erreicht. Auch mit diesem Verfahren können die gewünschten Quecksilbergehalte von höchstens 3 ppb aber nicht erreicht werden.

Aufgabe der vorliegenden Erfindung ist es daher, ein einfaches und wirtschaftlich befriedigendes Verfahren zu finden, mit dem die Quecksilbergehalte in Alkalilaugen, aber auch in Alkalialkoholatlösungen auf Werte von höchstens 3 ppb absenken lassen. Dementsprechend wurde ein Verfahren zur Entfernung von Quecksilber aus Lösungen durch Destillation gefunden, das verunreinigte gemäß Anspruch 1 und 2 definiert ist.

Überraschenderweise wurde gefunden, dass mit diesem Verfahren erheblich bessere Abreicherungsgrade von Quecksilber erreicht werden als mit bekannten Verfahren oder Verfahrensschritten: Quecksilber kann mit dem sehr einfachen erfindungsgemäßen destillativen Verfahren um einen Faktor von mehr als 100 abgereichert werden. Das erfindungsgemäße Verfahren ist zur Abreicherung von Quecksilber in Alkalilaugen und auch in Alkalialkoholatlösungen geeignet und kann mit anderen Reinigungsverfahren oder-verfahrensschritten kombiniert werden, um höhere Quecksilber-Abreicherungsgrade zu erreichen. Auch eine wiederholte Durchführung des erfindungsgemäßen destillativen Reinigungsverfahrens bewirkt eine entsprechend höhere Quecksilberabreicherung.

Die Lösung wird am Kopf der Kolonne in die Kolonne eingeleitet.

Die an Quecksilber abgereicherte Lösung wird am Kolonnensumpf abgezogen. Dies bedeutet, dass die Lösung am unteren Ende der Kolonne aus der Kolonne entnommen wird, d.h. unterhalb der eigentlichen Destillationsstruktur, in der der eine Destillation charakterisierende Gas-/Flüssigkeits-Austausch stattfindet. Das kann sowohl der eigentliche Sumpf, also das meist mit Flüssigkeit gefüllte untere Ende der Kolonne selbst wie auch ein damit verbundener sonstiger Flüssigkeitssammler oder Destillationsvorlage ("Destillationsblase") sein.

Das erfindungsgemäße Verfahren wird zur Entfernung von Quecksilber aus Alkalilaugen oder Alkalialkoholatlösungen eingesetzt, insbesondere solchen Alkalilaugen oder Alkalialkoholatlösungen, die durch Zersetzung von Alkaliamalgam mit Wasser oder Alkohol erzeugt werden. Die Herstellung von Alkaliamalgam und seine Zersetzung mit Wasser oder Alkohol, unkatalysiert oder unter Einsatz von Katalysatoren, sind bekannte Technologien. Als Alkali werden Lithium, Natrium, Kalium, Rubidium oder Cäsium eingesetzt, vorzugsweise Natrium oder Kalium. Durch Zersetzung von Natrium- oder Kaliumamalgam mit Wasser entsteht Natron- oder Kalilauge. Durch Zersetzung von Natrium- oder Kaliumamalgam mit Alkohol entsteht eine Lösung des entsprechenden Natrium- oder Kaliumalkoholats im entsprechenden Alkohol. Die Lauge oder die Alkoholatlösung sind dabei stets, wie oben beschrieben, mit Quecksilber verunreinigt, das mit dem erfindungsgemäßen Verfahren vollständig oder weitgehend entfernt wird.

Als Alkohol zur Erzeugung einer mit dem erfindungsgemäßen Verfahren zu behandelnden Alkalialkoholatlösung kann jeder beliebige Alkohol eingesetzt werden. Vorzugsweise wird ein substituierter oder unsubstituierter aliphatischer, alicyclischer, aromatischer, arylaliphatischer, arylalicyclischer, cycloalkylaromatischer oder alkylaromatischer Alkohol verwendet. Insbesondere werden die geradkettigen oder verzweigten aliphatischen Alkohole mit einem bis 6 Kohlenstoffatomen verwendet, wie Methanol, Ethanol, 1-Propanol ("n-Propanol"), 2-Propanol ("isoPropanol"), 1-Butanol ("n-Butanol"), 2-Butanol ("iso-Butanol"), 2-Methyl-1-propanol ("sec.-Butanol"), 1,1-Dimethyl-1-Ethanol ("tert.-Butanol"), oder die einzelnen isomeren C5- oder C6-Alkohole. Besonders bevorzugt ist die Verwendung von Methanol oder Ethanol.

Durch Zersetzung von Natrium- oder Kaliumamalgam mit Methanol oder Ethanol wird eine Lösung von Natriummethanolat oder Kaliummethanolat in Methanol oder eine Lösung von Natriumethanolat oder Kaliumethanolat in Ethanol erzeugt, die dann dem erfindungsgemäßen Verfahren unterzogen wird.

Die Konzentration der im erfindungsgemäßen Verfahren eingesetzten Lösung - also beispielsweise der durch Alkaliamalgamzersetzung mit Wasser oder Alkohol hergestellten Alkalilauge oder Alkalialkoholatlösung kann in weiten Bereichen variiert werden, sie ist für die vorliegende Erfindung nicht entscheidend. Die Konzentration der mit Quecksilber verunreinigten Lösung und die abdestillierte Lösungsmittelmenge werden so eingestellt, dass am Kolonnensumpf eine Lösung der gewünschten Konzentration und des gewünschten maximalen Quecksilbergehalts abgezogen wird.

Meist wird die Konzentration durch die Herstellungsbedingungen der Lösungen festgelegt oder entscheidend beeinflusst, im Fall der Alkaliamalgamzersetzung etwa von der zur Zersetzung eingesetzten Alkohol- oder Wassermenge und vom Alkaligehalt des Amalgams. Deshalb sind meist bestimmte Konzentrationen der zu reinigenden Lösung technisch üblich, und oft sind nachfolgende Verfahren sind auf diese üblichen Konzentrationen ihrer Einsatzstoffe ausgelegt. Die mit dem erfindungsgemäßen Verfahren vom Quecksilber befreite Lösung kann problemlos anschließend verdünnt oder aufkonzentriert und so auf die gewünschte Konzentration gebracht werden. Es ist jedoch ein Vorteil des erfindungsgemäßen Destillationsverfahrens, dass durch die Wahl der Konzentration der in die Kolonne eingeleiteten Lösung und der abdestillierten Lösungsmittelmenge eine Lösung der gewünschten Konzentration am Kolonnensumpf abgezogen werden kann. In einer bevorzugten Ausführungsform des erfindungsgemäßen Verfahrens wird der Lösung die Menge an Lösungsmittel, die abdestilliert wird, vor oder während der Destillation als zusätzliches Lösungsmittel zugesetzt und so die ursprüngliche Ausgangskonzentration der behandelten Lösung beibehalten. Dies kann durch Verdünnung der Lösung vor der Destillation, aber auch durch gleichzeitiges Einbringen von Lösung und Lösungsmittel in die Destillationskolonne erfolgen. Auf diese Weise wird die bei der üblichen Herstellung der Lösung entstehende und daher technisch auch übliche Konzentration der Lösung beibehalten und lediglich ihr Quecksilbergehalt gesenkt.

Wenn vor der erfindungsgemäßen Destillation weitere Reinigungsschritte durchgeführt werden, ist die verwendete Konzentration auch gemäß den Anforderungen dieser Reinigungsschritte einzustellen. Werden etwa zusätzlich Filtrationsschritte durchgeführt, verbietet sich ganz offensichtlich die Verwendung von Maischen.

Bei der Reinigung von Natrium- oder Kalilauge wird im Allgemeinen eine Konzentration von mindestens 10 Gew.-%, vorzugsweise mindestens 15 Gew.-%, in besonders bevorzugter Weise mindestens 20 Gew.-% sowie im Allgemeinen höchstens 70 Gew.-%., vorzugsweise höchstens 65 Gew.-% und in besonders bevorzugter Weise höchstens 60 Gew.-% von Natrium - oder Kaliumhydroxid in Wasser eingestellt. Bei der Reinigung von Natrium- oder Kaliummethanolat wird im Allgemeinen eine Konzentration von mindestens 20 Gew.-%, in bevorzugter Weise mindestens 25 Gew.-% und in besonders bevorzugter Weise mindestens 27 Gew.-% sowie im Allgemeinen höchstens 40 Gew.%, in bevorzugter Weise höchstens 32 Gew.-% und in besonders bevorzugter Weise höchstens 31 Gew.-% Natrium- oder Kaliummethanolat in Methanol eingestellt. Bei der Reinigung von Natrium- oder Kaliumethanolat wird im Allgemeinen eine Konzentration von mindestens 10 Gew.-%, in bevorzugter Weise mindestens 15 Gew.-% und in besonders bevorzugter Weise mindestens 16 Gew.-% sowie im Allgemeinen höchstens 30 Gew.%, in bevorzugter Weise höchstens 22 Gew.-% und in besonders bevorzugter Weise höchstens 20 Gew.-% Natrium- oder Kaliumethanolat in Ethanol eingestellt.

Der Lösung wird vor oder während der Destillation zusätzliches Lösungsmittel zugesetzt wobei ein zusätzliches Lösungsmittel verwendet, das höchstens denselben Siedepunkt hat wie das Lösungsmittel der mit Quecksilber verunreinigten Lösung. Mit anderen Worten, als zusätzliches Lösungsmittel kann ein Lösungsmittel verwendet werden, dass einen niedrigeren Siedepunkt hat als das Lösungsmittel der mit Quecksilber verunreinigten Lösung. Vorzugsweise wird jedoch das Lösungsmittel der mit Quecksilber verunreinigten Lösung auch als zusätzliches Lösungsmittel verwendet. Für die Entfernung von Quecksilber aus Laugen wie Natron- oder Kalilauge wird also vorzugsweise Wasser als zusätzliches Lösungsmittel verwendet, für die Entfernung von Quecksilber aus methanolischen Lösungen von Natrium- oder Kaliummethanolat Methanol und für die Entfernung von Quecksilber aus ethanolischen Lösungen von Natrium- oder Kaliumethanolat Ethanol.

Das Verhältnis von mit Quecksilber verunreinigter Lösung und zusätzlichem Lösungsmittel und die abdestillierte Lösungsmittelmenge werden so gewählt, dass einerseits die gewünschte Endkonzentration der gereinigten Lösung erreicht und andererseits die gewünschte Quecksilberabreicherung erreicht wird. Es wird ein Verhältnis von Lösung zu zusätzlichem Lösungsmittel von mindestens 30:1, in bevorzugter Weise mindestens 20:1 und in besonders bevorzugter Weise mindestens 10:3 sowie im Allgemeinen höchstens 1:3, in bevorzugter Weise 1:2 und in besonders bevorzugter Weise höchstens 4:1 eingestellt. Die Menge an abdestilliertem Lösungsmittel wird dann so gewählt, dass die gewünschte Endkonzentration der gereinigten Lösung erreicht wird.

Das zusätzliche Lösungsmittel wird entweder an der gleichen Position an der Kolonne wie die zu reinigende Lösung oder an einer davon verschieden Position in die Kolonne eingeleitet, beispielsweise am Sumpf der Kolonne, an einer Höhe zwischen Sumpf und Kopf der Kolonne oder am Kopf der Kolonne. Bequemerweise wird das zusätzliche Lösungsmittel an derselben Stelle wie die zu reinigende Lösung in die Kolonne geleitet.

Druck und Temperatur bei der Destillation werden gemäß den vorliegenden Rahmenbedingungen (etwa gemäß den am Ort der Kolonne vorhandenen Heizmedien) gewählt, dies ist eine Routineaufgabe. Typischerweise werden Druck und Temperatur wie bei der Destillation des betreffenden Lösungsmittels technisch üblich gewählt. Bei der Destillation von Wasser, Methanol oder Ethanol wird oft Normaldruck eingestellt und beim entsprechenden Siedepunkt unter Normaldruck destilliert.

Quecksilber wird aus dem abdestillierten Lösungsmittel als flüssige Phase abgetrennt und entsorgt oder vorzugsweise wieder in die Herstellung von Amalgam zurückgeführt. Das abdestillierte Lösungsmittel wird wieder aufbereitet oder entsorgt. Es kann ebenso wieder in die Kolonne zurückgeführt werden. Sofern es sich um das gleiche Lösungsmittel wie das in der mit Quecksilber verunreinigten Lösung handelt, wird es vorzugsweise zur Herstellung der Lösung verwendet. Bei der Herstellung von Alkalilauge oder Alkalialkoholatlösungen wird das abdestillierte Wasser oder der abdestillierte Alkohol also vorzugsweise in den Amalgamzersetzer zurückgeführt. In diesem Fall ist eine vorherige Abtrennung von Quecksilber meist unnötig, im Lösungsmittel enthaltenes Quecksilber wird dann im Zersetzer in den Quecksilberkreislauf von Amalgamherstellung und -zersetzung zurückgeführt. Es kann jedoch - wie praktisch immer bei Rückführungen von Stoffströmen empfehlenswert sein, einen Teilstrom des rückgeführten Lösungsmittelstroms auszuschleusen und zu entsorgen, um ein Aufpegeln von Verunreinigungen (Quecksilber und/oder mögliche andere Verunreinigungen) zu verhindern oder zu begrenzen.

Die Ausführungsform der verwendeten Destillationskolonne ist nicht entscheidend für die Erfindung und kann nach im wesentlichen wirtschaftlichen Erwägungen erfolgen, die geforderte Trennleistung zum Abdestillieren des Lösungsmittels muss jedoch gegeben sein. Die Ausführung solcher Kolonnen ist Stand der Technik. Es können beispielsweise Bodenkolonnen oder gepackte Kolonnen verwendet werden. Die Verwendung von Bodenkolonnen ist wegen des einfacheren Aufbaus der Destillationstruktur bevorzugt. Es kann jede bekannte Bauform von Kolonnenböden verwendet werden, beispielsweise Glockenböden, Tunnelböden oder Ventilböden.

Das erfindungsgemäße Quecksilber-Abreicherungsverfahren kann mit jedem anderen bekannten Reinigungsverfahren zu einem Gesamtverfahren kombiniert werden, um auch die Abreicherungswirkung der verschiedenen Verfahrensschritte des Gesamtverfahrens zu kombinieren. Beispielsweise führt die Kombination des erfindungsgemäßen Verfahrens mit einem weiteren Verfahren, mit dem Quecksilber um den Faktor 10 abgereichert wird, zu einer Gesamtabreicherung um einen Faktor von ungefähr 10³, und die Kombination mit zwei weiteren Verfahren, mit denen Quecksilber jeweils um einen Faktor von 10 abgereichert werden kann, zu einer Gesamtabreicherung um den Faktor 10⁴. Die Reihenfolge der Durchführung der einzelnen Verfahrensschritte des Gesamtverfahrens kann grundsätzlich frei gewählt werden. Im Allgemeinen ist es vorteilhaft, Verfahrensschritte, die vorwiegend zur Entfernung größerer Quecksilbermengen geeignet sind, zuerst durchzuführen, um erst mit dem erfindungsgemäßen Verfahren die abschließende Feinreinigung durchzuführen, ohne vergleichsweise hohe Quecksilbermengen in die Destillationskolonne zu führen. Beispielsweise ist es empfehlenswert, mechanische Verfahren wie etwa die Koaleszenz von Quecksilbertröpfchen zu größeren Tropfen vor dem erfindungsgemäßen Destillationsverfahren durchzuführen. Werden unter Inkaufnahme ihrer Nachteile zusätzlich auch Absorptionsmittel auf Basis amalgamierender Edelmetalle eingesetzt, so werden sie vorzugsweise nach der erfindungsgemäßen Destillation verwendet, um so ihre hohe Reinigungswirkung bei jedoch geringer Absorptionskapazität optimal auszunutzen. Das erfindungsgemäße destillative Verfahren erübrigt jedoch den Einsatz solcher Absorptionsmittel, bestenfalls mit Ausnahme einiger Sonderfälle mit extremen Reinheitsanforderungen.

Das erfindungsgemäße Destillationsverfahrens zur Reinigung insbesondere von Alkalilaugen oder Alkalialkoholatlösungen wird vor der Destillation eine Filtration durch Kohle durchgeführt. Für diesen Filtrationsschritt kann jedes der bekannten Aktivkohlefiltrationsverfahren für derartige Lösungen verwendet werden. Einer der Vorteile des erfindungsgemäßen Verfahrens ist es, dass für einen vorgelagerten Kohlefiltrationsschritt die Verwendung einer vergleichsweise groben Kohle ausreicht und so die Verstopfungsproblematik durch feine Schlämme in Alkoholatlösungen vermieden wird. Typischerweise wird für einen Kohlefiltrationsschritt eine Kohle mit einer mittleren Korngröße von im Allgemeinen mindestens 10 Mikrometer, vorzugsweise mindestens 20 Mikrometer, sowie höchstens 1000 Mikrometer, vorzugsweise höchstens 500 Mikrometer verwendet. Die BET-Oberfläche solcher Kohlen liegt im Allgemeinen bei mindestens 0,2 m²/g, vorzugsweise mindestens 0,5 m²/g sowie im Allgemeinen höchstens 1000 m²/g, vorzugsweise höchstens 10 m²/g. Gut geeignet ist beispielsweise Elektrographit. Ein bevorzugter Elektrographit weist eine Oberfläche von ca. 1 m²/g auf. In üblicher Weise wird die mit Quecksilber verunreinigte Lösung durch eine Kohleschicht filtriert, die mindestens 0,5 mm, vorzugsweise 1 mm sowie höchstens 30, vorzugsweise höchstens 10 mm dick ist. Dazu kann jede Filterkonstruktion eingesetzt werden, in der eine entsprechende Kohlefilterschicht angeschwemmt werden kann, beispielsweise Flachfilter, Scheibenfilter, Kerzenfilter, Tellerfilter, Nutschen, Kantenspaltfilter oder Kunststoffschnurfilterkerzen. Bevorzugt ist die Verwendung von Kantenspaltfiltern, auf die Kohle in Form einer Suspension im verwendeten Lösungsmittel angeschwemmt wird. Dies ist wohlbekannter Stand der Technik.

Weiterhin wird das erfindungsgemäße Destillationsverfahren mit einem Filtrationsschritt unter Verwendung von Fasermaterialien kombiniert. Auch diese Filtrationsverfahren sind bekannt. Es werden inerte Fasern verwendet, beispielsweise Fasern aus Polyethylen, Polypropylen, Polystyrol, Polytetrafluorethylen, Cellulose, Mineralfasem wie Glas- oder Steinwolle, oder Gemische von solchen Fasern. Die Fasern werden üblicherweise zu einem flächigen Gebilde gepresst und wahlweise auch gesintert, mit einem Binder, Füll- und/oder Zusatzstoffen oder einem Stützgewebe versehen. Diese Vliesmatten weisen offene Kanäle oder Poren auf und haben typischerweise eine Porosität im Bereich von 50 bis 90 %. Sie werden in üblichen Formen verwendet, beispielsweise als Scheiben, als Filtermodule, als Filterkerzen (üblicherweise als Zylinder mit durch Faltung vergrößerter Oberfläche) oder in jeder anderen bekannten Form.

Die Filtration durch ein Faserfilter wird vor der Destillation und nach der Filtration durch Kohle durchgeführt. In der vorliegenden Erfindung bevorzugter Erfindung wird Natron- oder Kalilauge, eine methanolische Lösung von Natrium- oder Kaliummethanolat oder eine ethanolische Lösung von Natrium- oder Kaliumethanolat zunächst durch einen Kohlefilter filtriert, dann durch einen Filter aus inertem Fasermaterial filtriert, und anschließend durch Einleiten in eine Destillationskolonne, gemeinsam mit einer zusätzlichen Menge des Lösungsmittels, vorzugsweise dem der zu reinigenden Lösung, am Kopf der Kolonne, Abdestillieren von Lösungsmittel und Abziehen der gereinigten Lauge oder Alkoholatlösung am Kolonnensumpf von Quecksilber befreit.

Es ist ebenso möglich, die Filtrationsschritte mehrfach durchzuführen oder sie in beliebiger Weise zu kombinieren.. Beispielsweise kann mehrfach durch Kohle, mehrfach durch Fasermaterial, oder mehrfach durch Kohle und Fasermaterial filtriert werden. Die konkrete Ausgestaltung und Abfolge von einzelnen Filtrationsschritten ist eine Routineaufgabe des Fachmanns, die dieser gemäß dem zu behandelnden Strom, seinem Verunreinigungsgehalt und den Anforderungen an die Abreicherung löst.

Mit dem beschriebenen Verfahren ist eine sehr einfache Abreicherung von Quecksilber auf die durch Einsatz von amalgamierenden Edelmetallen erreichbaren Werte, d.h. auf höchstens 3 ppb möglich, ohne dass die Nachteile der amalgamierenden Edelmetalle in Kauf genommen werden müssten.

### Beispiele

### Beispiel 1 (nicht erfindungsgemäß)

Ein Kantenspaltfilter wurde durch Anschwemmen einer Suspension aus Elektrographit (mittlere Korngröße 300 Mikrometer, BET-Oberfläche 1,1 m²/g) in Methanol mit einer 2 bis 3 mm starken Kohleschicht belegt. Bei einer Temperatur von 70-80 °C wurde eine quecksilberbelastete methanolische Natriummethanolatlösung (27 Gew.-%) bei einer Durchflussmenge von 12-15 Liter pro 100 cm² Filterfläche und Stunde filtriert. Die ablaufende Lösung wurde anschließend gemeinsam mit 20 Liter Methanol pro 100 Liter Natriummethanolatlösung auf den Kopf einer kontinuierlich betriebenen Tunnelbodenkolonne gegeben. Es wurde soviel Methanol abdestilliert, dass am Sumpf der Kolonne eine 30 Gew.-%ige Natriummethanolatlösung erhalten wurde.

Vor und nach Filtration sowie nach der Destillation wurden jeweils 4 Proben entnommen und auf ihren Quecksilbergehalt analysiert. Die Ergebnisse sind in der folgenden Tabelle dargestellt.

| vor Filtration | nach Filtration | nach Destillation |
|---|---|---|
| [ppm] | [ppm] | [ppb] |
| 23 | 3,3 | 20 |
| 21 | 4,3 | 10 |
| 18 | 3,3 | 14 |
| 17 | 3,1 | 12 |

Die Werte zeigen, dass mit dem erfindungsgemäßen Destillationsverfahren Quecksilber-Abreicherungsgrade von deutlich mehr als 100 erreicht werden und so trotz Verwendung einer relativ groben Filterkohle und mit einem nur zweistufigen Verfahren bereits niedrigere Quecksilbergehalte erreicht werden als mit dem Verfahren von DE 197 04 889, bei dem die mit Quecksilber verunreinigte Lösung in einer Destillationsblase vorgelegt und lediglich das Lösungsmittel abgezogen wird.

### Beispiel 2

Es wurde mit einer 27 Gew.-%igen Natriummethanolatlösung wie in Beispiel 1 eine Kohlefiltration durchgeführt. Anschließend wurde die Methanolatlösung mit Methanol im Verhältnis 5 : 1 verdünnt und über ein Scheibenfiltermodul mit einer Filterschicht aus einem Gemisch von Zellulosefasern mit Kieselgur mit Porenweiten im Bereich von 2 bis 5 Mikrometer filtriert. Danach wurde die Lösung ohne weitere Verdünnung auf den Kopf einer kontinuierlich betriebenen Tunnelbodenkolonne gegeben. Es wurde soviel Methanol abdestilliert, dass am Sumpf der Kolonne eine 30 Gew.-%ige Natriummethanolatlösung erhalten wurde.

Vor und nach Filtration sowie nach der Destillation wurden jeweils 5 Proben entnommen und auf ihren Quecksilbergehalt analysiert. Die Ergebnisse sind in der folgenden Tabelle dargestellt.

| vor Filtration | nach Kohlefiltration | nach Filtration durch Fasermaterial und Destillation |
|---|---|---|
| [ppm] | [ppm] | [ppb] |
| 18 | 2,3 | 1-2 |
| 19 | 3,5 | 2 |
| 19 | 2,9 | 1 |
| 19 | 2,3 | 2 |
| >100 | 1,8 | <1 |

### Beispiel 3

Es wurde mit einer 27 Gew.-%igen Natriummethanolatlösung wie in Beispiel 1 eine Kohlefiltration durchgeführt. Anschließend wurde die Methanolatlösung mit Methanol im Verhältnis 5 : 1,1 verdünnt und über ein Kerzenfiltermodul mit Filterkerzen aus Polypropylenfaservlies filtriert. Die Kerzen wurden mit 460 bis 560 l/h, bezogen auf ein Filterelement mit 10 Zoll Länge, belastet. Danach wurde die Lösung ohne weitere Verdünnung auf den Kopf einer kontinuierich betriebenen Tunnelbodenkolonne gegeben. Es wurde soviel Methanol abdestilliert, dass am Sumpf der Kolonne eine 30 Gew.-%ige Natriummethanolatlösung erhalten wurde.

Vor und nach Filtration sowie nach der Destillation wurden jeweils 2 Proben entnommen und auf ihren Quecksilbergehalt analysiert. Die Ergebnisse sind in der folgenden Tabelle dargestellt.

| vor Filtration | nach Kohlefiltration | nach Filtration durch Fasermaterial und Destillation |
|---|---|---|
| [ppm] | [ppm] | [ppb] |
| 10,8 | 3,6 | 1 |
| 13,8 | 4,2 | 1 |

Beispiele 2 und 3 zeigen, dass unter Einsatz des erfindungsgemäßen Destillationsverfahrens mit vergleichbarem Aufwand wie bei vorbekannten Verfahren Quecksilber bis in den untersten ppb-Bereich abgereichert werden kann.

## Patentansprüche

1. Verfahren zur Entfernung von Quecksilber aus mit Quecksilber verunreinigten Lösungen durch Destillation, **dadurch gekennzeichnet,**
**daß** die Lösung eine Alkalilauge mit Wasser als Lösungsmittel ist,
**daß** man die mit Quecksilber verunreinigte Lösung zuerst durch Kohle und anschließend durch inertes Fasermaterial filtriert und anschließend oberhalb des Kolonnensumpfs in eine Destillationskolonne einleitet,
**daß** man außer der mit Quecksilber verunreinigten Lösung noch zusätzliches Lösungsmittel in die Kolonne einleitet,
**daß** man mit Quecksilber verunreinigte Lösung und zusätzliches Lösungsmittel in einem Volumenverhältnis im Bereich von 30 : 1 bis 1 : 3 in die Kolonne einleitet, und
**daß** man die mit Quecksilber verunreinigte Lösung am Kolonnenkopf einleitet,
Wasser abdestilliert und an Quecksilber abgereicherte Alkalilauge am Kolonnensumpf abzieht.

2. Verfahren zur Entfernung von Quecksilber aus mit Quecksilber verunreinigten Lösungen durch Destillation, **dadurch gekennzeichnet,**
**daß** die Lösung eine alkoholischen Alkalialkoholatlösung mit Alkohol als Lösungsmittel ist,
**daß** man die mit Quecksilber verunreinigte Lösung zuerst durch Kohle und anschließend durch inertes Fasermaterial filtriert und anschließend oberhalb des Kolonnensumpfs in eine Destillationskolonne einleitet,
**daß** man außer der mit Quecksilber verunreinigten Lösung noch zusätzliches Lösungsmittel in die Kolonne einleitet,
**daß** man mit Quecksilber verunreinigte Lösung und zusätzliches Lösungsmittel in einem Volumenverhältnis im Bereich von 30 : 1 bis 1 : 3 in die Kolonne einleitet, und
**daß** man die mit Quecksilber verunreinigte Lösung am Kolonnenkopf einleitet,
Alkohol abdestilliert und an Quecksilber abgereicherte alkoholischen Alkalialkoholatlösung am Kolonnensumpf abzieht.

## Claims

1. A process for the removal of mercury from solutions contaminated with mercury by distillation, **characterized in that** the solution is an alkali solution with water as the solvent, **in that** the solution contaminated with mercury is filtered firstly through carbon, then through inert fiber material and then introduced into a distillation column above the column bottom, **in that** apart from the solution contaminated with mercury, additional solvent is introduced into the column, **in that** the solution contaminated with mercury and additional solvent is introduced into the column in a volume ratio in the range from 30:1 to 1:3, **in that** the solution contaminated with mercury is introduced at the column top and **in that** water is distilled off and alkali solution depleted in mercury is withdrawn at the column bottom.

2. A process for the removal of mercury from solutions contaminated with mercury by distillation, **characterized in that** the solution is an alcoholic alkali metal alkoxide solution with alcohol as the solvent, **in that** the solution contaminated with mercury is filtered firstly through carbon, then through inert fiber material and then introduced into a distillation column above the column bottom, **in that** apart from the solution contaminated with mercury, additional solvent is introduced into the column, **in that** the solution contaminated with mercury and additional solvent is introduced into the column in a volume ratio in the range from 30:1 to 1:3, **in that** the solution contaminated with mercury is introduced at the column top and **in that** alcohol is distilled off and alcoholic alkali metal alkoxide solution depleted in mercury is withdrawn at the column bottom.

## Revendications

1. Procédé d'élimination, par distillation, de mercure de solutions contaminées par du mercure, **caractérisé en ce que** la solution est une lessive alcaline avec de l'eau comme le solvant et **en ce qu'**on filtre la solution contaminée par du mercure tout d'abord au travers de charbon et puis au travers d'une matière fibreuse inerte et ensuite on l'introduit dans une colonne de distillation au-dessus du fond de colonne, **en ce que**, outre la solution contaminée par du mercure, on introduit encore dans la colonne du solvant supplémentaire, **en ce qu'**on introduit dans la colonne la solution contaminée par du mercure et du solvant supplémentaire dans un rapport volumique de l'ordre de 30/1 à 1/3, **en ce qu'**on introduit la solution contaminée par du mercure à la tête de la colonne et **en ce qu'**on sépare l'eau par distillation et on soutire au fond de colonne une lessive alcaline appauvrie en mercure.

2. Procédé d'élimination, par distillation, de mercure de solutions contaminées par du mercure, **caractérisé en ce que** la solution est une solution alcoolique d'alcoolate de métal alcalin avec de l'alcool comme le solvant, **en ce qu'**on filtre la solution contaminée par du mercure tout d'abord au travers de charbon et puis au travers d'une matière fibreuse inerte et ensuite on l'introduit dans une colonne de distillation au-dessus du fond de colonne, **en ce que**, outre la solution contaminée par du mercure, on introduit encore dans la colonne du solvant supplémentaire, **en ce qu'**on introduit dans la colonne la solution contaminée par du mercure et du solvant supplémentaire dans un rapport volumique de l'ordre de 30/1 à 1/3, **en ce qu'**on introduit la solution contaminée par du mercure à la tête de la colonne et **en ce qu'**on sépare l'alcool par distillation et on soutire au fond de colonne une solution alcoolique d'alcoolate de métal alcalin appauvrie en mercure.
